# EUROPÄISCHE PATENTSCHRIFT

(11) **EP 1 933 967 B1**
(45) Veröffentlichungstag und Bekanntmachung des Hinweises auf die Patenterteilung: **22.07.2009**
(21) Anmeldenummer: 06753548.4
(22) Anmeldetag: 10.05.2006
(51) Int. Cl.: B01D 35/153, F01M 11/03

(54) **ÖLFILTERANORDNUNG**
OIL FILTER ASSEMBLY
ENSEMBLE FILTRE A HUILE

(30) Priorität: 25.08.2005 DE 102005041041
(43) Veröffentlichungstag der Anmeldung: 25.06.2008
(73) Patentinhaber: Joma-Polytec Kunststofftechnik GmbH, 72411 Bodelshausen (DE)
(72) Erfinder: HEINZ, Stefan, 72411 Bodelshausen (DE); PFITZER, Friedhelm, 72414 Rangendingen (DE); JUNGMANN, Peter, 72406 Bisingen (DE); MAUTE, Alexander, 72379 Hechingen-Stetten (DE)
(74) Vertreter: Bulling, Alexander
(86) Internationale Anmeldenummer: PCT/EP2006/004383
(87) Internationale Veröffentlichungsnummer: WO 2007/022809

(56) Entgegenhaltungen:
- DE-A1- 4 408 888
- DE-U1- 29 920 634
- DE-U1- 29 921 168
- DE-U1- 29 922 488
- GB-A- 2 162 079
- US-A- 5 098 559

## Beschreibung

Die Erfindung betrifft eine Ölfilteranordnung mit einem Gehäuse, das einen Aufnahmeraum für ein in das Gehäuse einsetzbares, radial mit Öl durchströmbares Filterelement aufweist, und mit einem bei eingesetztem Filterelement das Filterelement tragenden Stützrohr, wobei am Boden des Aufnahmeraums eine Ablassöffnung und in der Ablassöffnung ein Ablassventil vorgesehen ist, das bei eingesetztem Filterelement geschlossen ist, wobei das Ablassventil einen Ausgleichskörper zum Ausgleich von axialen Toleranzen des Gehäuses und/oder des Filterelements umfasst.

Aus der DE 44 08 888 C2 ist bekannt geworden, am Boden des Aufnahmeraums eine Ablassöffnung in der Ablässöffnung ein Ablassventil vorzusehen, das bei eingesetztem Filterelement geschlossen ist. Das Ablassventil umfasst dabei einen Ausgleichskörper, der in der genannten Druckschrift Betätigungskörper genannt wird, der mit seinem Außenumfang an der Wandung des Ablasskanals geführt wird. Der Ausgleichskörper dient dabei zum Ausgleich von axialen Toleranzen des Gehäuses und/oder des Filterelements.

Der Ablasskanal führt dabei den Ausgleichskörper in axialer Richtung, wobei auf den Ausgleichskörper in Querrichtung wirkende Kräfte über den Ablasskanal in das Gehäuse ableitbar sind. Gerade beim Einsetzten des Filterelements und beim Aufschrauben eines den Aufnahmeraum verschließenden Deckels ist nicht auszuschließen, dass das Filterelement von der Drehbewegung des Deckels mitgenommen wird und deshalb Querkräfte auf den Ausgleichskörper wirken.

Aufgrund der Anordnung des Ablassventils im Ablasskanal können sich bei diesem Stand der Technik dort allerdings Verschmutzungen und Verunreinigungen ansammeln, was die Funktionsfähigkeit des Ausgleichskörpers und des gesamten Ablassventils negativ beeinträchtigen kann.

Aus der DE 299 20 634U1, DE 299 22 488 U1 und der DE 299 21 168 U1 ist ein Flüssigkeitsfilter bekannt geworden, bei dem ein Rücklaufsperrventil bei eingesetztem Filtereinsatz über ein am Gehäuse bzw. am im Auslass des Gehäuses axial verlagerbares Kombinationsbauteil geschlossen wird.

Der vorliegenden Erfindung liegt die Aufgabe zugrunde, eine Ölfilteranordnung bereitzustellen, die einen vergleichsweise einfachen Aufbau aufweist und bei der ein funktionssicheres Arbeiten des Ablassventils gewährleistet wird.

Diese Aufgabe wird durch eine Ölfilteranordnung mit den Merkmalen des Anspruchs 1 gelöst.

Dadurch, dass erfindungsgemäß das Stützrohr den Ausgleichskörper führt, kann dies außerhalb des Ablasskanals und insbesondere oberhalb des Bodens des Aufnahmeraums erfolgen. Dies hat den Vorteil, dass der Ausgleichskörper von im Aufnahmeraum vorhandenen Öl durchspült wird und sich dadurch keine Verschmutzungen oder Ablagerungen am Ausgleichskörper störend ansammeln können. Zudem wird der Ausgleichskörper sicher gegen eine Auslenkung aufgrund von Querkräften geschützt.

Da das Stützrohr die Führung aufweist ist kein zusätzliches Bauteil für das Ölfiltermodul vorzusehen. Die Führung ist erfindungsgemäß an einem in nach radial außen gewandter Richtung abstehenden Fuß oder an einem in nach radial außen gewandter Richtung abstehenden Kragen des Stützrohrs angeordnet. Die Führung ist dabei als Durchbruch ausgebildet . Insbesondere kann es sich hierbei um einen geschlossenen Kreisdurchbruch handeln, dessen Innendurchmesser geringfügig größer ist als die Außenmaße des Ausgleichskörpers.

Dabei kann ferner vorgesehen sein, dass die axiale Bewegbarkeit des Ausgleichskörpers durch die Führung am Stützrohr begrenzt wird. Die Führung dient dann zusätzlich als Verliersicherung für den Ausgleichskörper in axialer Richtung.

Erfindungsgemäß kann ferner vorgesehen sein, dass das Ablassventil einen zwischen einer Schließstellung und einer Öffnungsstellung beweglich verlagerbaren Ventilkörper umfasst, der bei eingesetztem Filterelement von einem ersten Federelement in die Schließstellung beaufschlagt wird und von einem zweiten, gegenüber dem ersten-Federelement schwächer ausgebildeten Federelement in Öffnungsstellung beaufschlagt wird, wobei der Ausgleichskörper am Ventilkörper axial verlagerbar angeordnet ist und bei eingesetztem Filterelement vom ersten Federelement gegen das Filterelement beaufschlagt wird. Eine derartige Anordnung hat sich als besonders geeignet und funktionssicher herausgestellt.

Ferner ist das Stützrohr in den Aufnahmeraum eingesetzt und derart am Gehäuse insbesondere unlösbar und/oder verschraubt befestigt, dass der vom stütz rohr geführte Ausgleichskörper gegen eine Auslenkung auf frund von Querkräften geschützt ist. Hierdurch werden insbesondere bei der Fertigung der Ölfilteranordnung enorme Vorteile erzielt. Das Gehäuse kann als solches nach bekannter Art und Weise gefertigt werden. Insbesondere ist denkbar, das Gehäuse aus Kunststoff herzustellen. Erfindungsgemäß kann das zargenartig ausgebildete Stützrohr separat vom Gehäuse gefertigt werden und in das Gehäuse eingesetzt werden. Schließlich wird das Stützrohr am Gehäuse befestigt. Hierdurch wird eine sichere Anordnung des Stützrohrs gewährleistet, bei der das Filterelement auf das Stützrohr aufgeschoben beziehungsweise vom Stützrohr abgezogen werden kann.

Gemäß einer Weiterbildung der Erfindung kann vorgesehen sein, dass das Gehäuse im Bereich des Bodens des Aufnahmeraums Befestigungsabschnitte aufweist und dass die dem Boden des Aufnahmeraums zugewandte Seite des Stützrohrs mit den Befestigungsabschnitten korrespondierende Befestigungsbereiche aufweist. Durch das Vorsehen der Befestigungsabschnitte im Bereich des Bodens des Aufnahmeraums kann eine sichere Anordnung des Stützrohrs erreicht werden, ohne dass hierdurch die radiale Durchströmbarkeit des Filterelements und des Stützrohrs beeinträchtigt wird.

Erfindungsgemäß kann ferner vorgesehen sein, dass an den Befestigungsabschnitten beziehungsweise den Befestigungsbereichen Verbindungszapfen beziehungsweise mit den Verbindungszapfen korrespondierende Zapfenaussparungen vorgesehen sind. Über die Verbindungszapfen und die damit korrespondierenden Zapfenaussparungen kann auf einfache Art und Weise eine dauerhafte und unlösbare Anordnung des Stützrohrs am Gehäuse erreicht werden. Dabei können die Verbindungszapfen beispielsweise als-Nietzapfen, und insbesondere als Schweißnietzapfen ausgebildet sein. Nach dem Einsetzen des Stützrohrs können dann die Nietzapfen derart vernietet werden, dass eine unlösbare Verbindung des Stützrohrs mit dem Gehäuse stattfindet. Insbesondere dann, wenn das Gehäuse und auch das Stützrohr aus Kunststoff ist, bietet es sich an, die unlösbare Verbindung durch Heißnieten herzustellen.

Erfindungsgemäß kann allerdings auch vorgesehen sein, dass die Verbindungszapfen als Rastzapfen ausgebildet sind. Durch ein Verrasten, und insbesondere durch ein unlösbares Hinterrasten der Rastzapfen mit den Zapfenaussparungen, kann ebenfalls erreicht werden, dass das Stützrohr unlösbar am Gehäuse befestigt wird.

Gemäß der Erfindung kann das Stützrohr auch mittels Schraubverbindungen am Gehäuse befestigt sein.

Eine bevorzugte Ausführungsform der Erfindung ergibt sich dann, wenn die Befestigungsabschnitte des Gehäuses als in axialer und/oder radialer Richtung verlaufende Stege ausgebildet sind, an deren dem Filterelement zugewandten Oberseiten jeweils wenigstens ein Verbindungszapfen angeordnet ist. Die Stege erstrecken sich dabei vorteilhafterweise vom Boden des Aufnahmeraums in axialer Richtung nach oben und bilden eine Anlage für das Stützrohr. Beim Einsetzen des Stützrohrs liegt dieses folglich an der Oberseite der Stege an. Bei Vorsehen von Nietzapfen kann eine Nietverbindung zwischen den Stegen und dem Stützrohr realisiert werden. Ein Vernieten kann hierbei vorteilhafterweise in axialer Richtung von oben erfolgen. Die Stege können sich dabei in radialer Richtung wenigstens abschnittsweise über den Boden des Aufnahmeraums erstrecken. Hierdurch kann die Steifigkeit des Gehäuses erhöht werden.

Um ein funktionssicheres Befestigen des Stützrohrs zu ermöglichen, können vorteilhafterweise die Befestigungsbereiche als in nach radial außen gewandter Richtung abstehende Füße oder als in nach radial außen gewandter Richtung abstehender und wenigstens abschnittsweise umlaufender Kragen ausgebildet sein. Für den Fall, dass im Bereich des Bodens des Aufnahmeraums Stege mit Verbindungszapfen vorgesehen sind, sind an den Füßen beziehungsweise am Kragen mit den Verbindungszapfen korrespondierende Zapfenaussparungen vorgesehen. Durch das Vorsehen der Füße beziehungsweise des Kragens können in Querrichtung auf das Stützrohr beziehungsweise auf das Stützrohr aufgesetzte Filterelement wirkende Kräfte vorteilhaft in das Gehäuse abgeleitet werden.

Eine vorteilhafte Ausführungsform der Erfindung ergibt sich auch dann, wenn das Stützrohr im Bereich des Bodens des Aufnahmeraums ein in radialer Richtung geschlossenes zum Stützrohr radial beabstandetes Staurohr umgibt. Beim Einsetzen des Stützrohrs kann dieses beispielsweise auf das Staurohr aufgesetzt werden. Das Staurohr dient dann als Fügehilfe.

Gemäß einer Weiterbildung der Erfindung kann ferner vorgesehen sein, dass an der dem Boden des Aufnahmeraums abgewandten freien Seite des Stützrohrs ein Überdruck-Umgehungsstrichventil angeordnet ist. Ein derartiges Ventil öffnet dann, wenn ein Grenzdruck überschritten wird, beispielsweise aufgrund eines sich mit Verschmutzungen zusetzendem Filterelement.

Weitere Einzelheiten und vorteilhafte Ausgestaltungen der Erfindung sind der folgenden Beschreibung zu entnehmen, mit der die in der Zeichnung dargestellte Ausführungsform näher beschrieben und erläutert wird.

Es zeigen:
- Figur 1: einen Längsschnitt durch eine erfindungsgemäße Ölfilteranordnung;
- Figur 2 1;: eine Draufsicht gemäß dem Pfeil II in Figur
- Figur 3: einen Teilschnitt entlang der Linie III in Figur 2; und
- Figur 4: eine Vergrößerung des Bereichs IV in Figur 1.

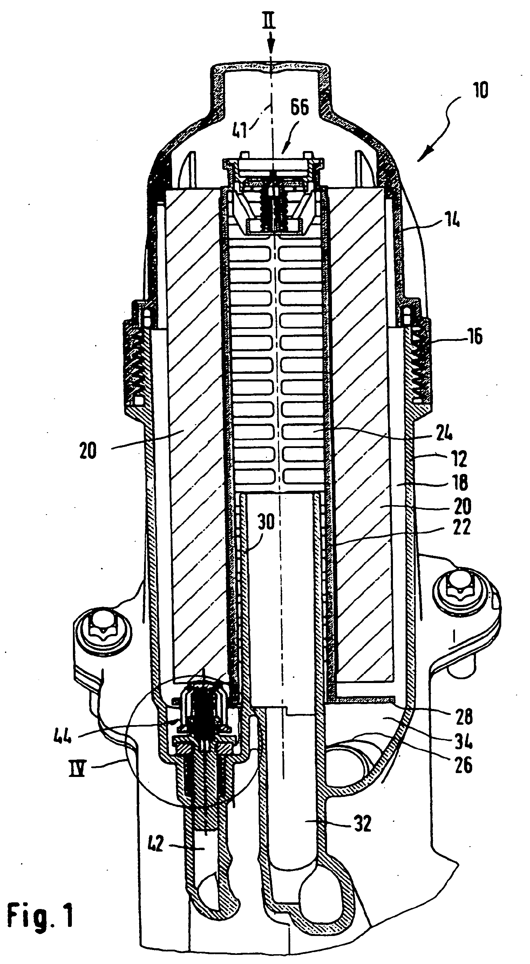

Die in der Figur 1 dargestellte Ölfilteranordnung 10 umfasst ein Gehäuse 12, das mit einem Deckel 14 über ein Gewinde 16 verschraubbar ist. Das Gehäuse 12 und der Deckel 14 umschließen einen Aufnahmeraum 18, in dem ein radial mit Öl durchströmbares Filterelement 20 angeordnet ist. Das Filterelement 20 wird dabei von einem zargenartigen Stützrohr 22 getragen. Zur radialen Durchströmung des Stützrohres 22 mit Öl sind am Stützrohr eine Vielzahl von Durchbrüchen 24 vorgesehen. Das Stützrohr 22 weist an seinem dem Boden 26 des Aufnahmeraums zugewandten Seite einen nach radial außen gerichteten, umlaufenden Ringkragen 28 auf. Anstelle des Vorsehens eines umlaufenden Ringkragens ist erfindungsgemäß ebenfalls denkbar, lediglich Ringkragenabschnitte oder Füße vorzusehen, die sich in radial außen gewandter Richtung erstrecken.

Das Stützrohr 22 umgibt im unteren Bereich ein am Boden 26 des Aufnahmeraums angeordnetes, sich in axialer Richtung nach oben erstreckendes und in radialer Richtung geschlossenes Staurohr 30. Das Staurohr 30 mündet in einem Ölauslass 32 für gefiltertes Reinöl. Ein Öleinlass 34 für zu filterndes Rohöl befindet sich im Bereich des Bodens 26 des Aufnahmeraums 18.

Im Betrieb der Ölfilteranordnung strömt zu filterndes Rohöl vom Öleinlass 34 radial durch das Filterelement 20 hin zum Ölauslass 32.

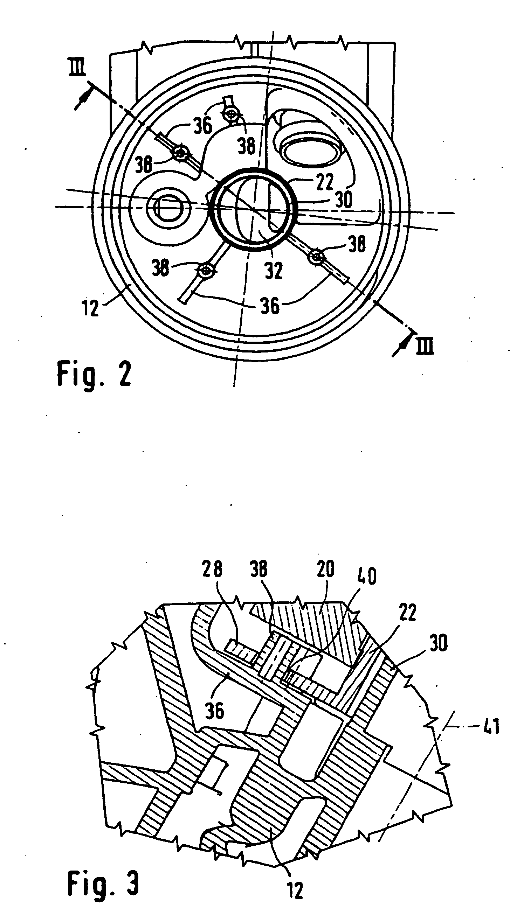

Das Stützrohr 22 ist in axialer Richtung von oben in den Aufnahmeraum 18 eingesetzt und ist dort unlösbar befestigt. Dazu sind im Bereich des Bodens 26 in der Ansicht nach Figur 2, die die Draufsicht auf dem Boden 26 zeigt, Befestigungsabschnitte 36 vorgesehen. Ein derartiger Befestigungsabschnitt 36 ist in der Figur 3 im Schnitt vergrößert dargestellt. In Figur 3 ist deutlich zu erkennen, dass an der dem Filterelement 20 zugewandten Oberseite der stegartige Befestigungsabschnitte 36 ein Befestigungszapfen 38 angeordnet ist, der als Schweißhohlnietzapfen im unvernieteten Zustand dargestellt ist. Der Zapfen 38 greift dabei in eine mit ihm korrespondierende, am Kragen 28 des Stützrohrs 22 vorgesehene Zapfenaussparung 40. Zur unlösbaren und dauerhaften Befestigung des Stützrohrs 22 werden die Befestigungszapfen mittels Heißnieten plastisch verformt. Das Stützrohr 22 sowie das Gehäuse 12 sind dabei aus Kunststoff hergestellt. Anstelle des Heißnietens kann auch vorgesehen sein, dass die Zapfen Innen- oder Außengewinde aufweisen, so dass der Kragen 28 über Schrauben oder Muttern am Gehäuse verschraubt werden kann. Bei nicht eingesetztem Filterelement 20 sind die Befestigungszapfen von axial oben zugänglich.

Wie insbesondere aus der Figur 3 deutlich wird, verläuft die Oberseite der Befestigungsabschnitte 36 parallel zum Kragen 28 beziehungsweise senkrecht zur Mittellängsachse 41 des Gehäuses 12. Hierdurch ergibt sich zwischen den Befestigungsabschnitten 36 und dem Kragen 28 eine optimale Anlagefläche. Beim Einführen des Stützrohrs 22 kann dieses soweit auf das Staurohr 30 aufgesteckt werden, bis der Kragen 28 an den Befestigungsabschnitten zum Anliegen kommt.

Wie in der Figur 1 gezeigt ist, ist am Boden 26 des Gehäuses 12 eine Ablassöffnung 42 vorgesehen, in der ein Ablassventil 44 angeordnet ist. Bei eingesetztem Filterelement 20 ist das Ablassventil 44 in Schließstellung.

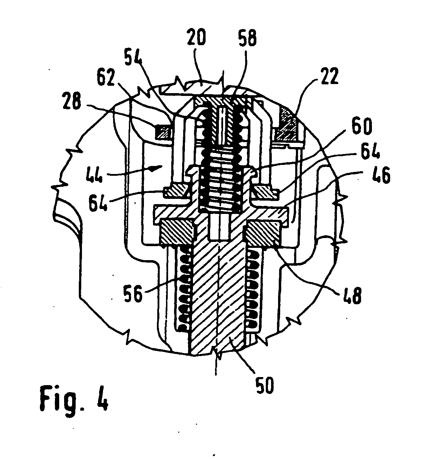

Aus der Vergrößerung gemäß Figur 4 wird deutlich, dass das Ablassventil 44 einen zwischen einer Schließstellung und einer Öffnungsstellung beweglich verlagerbaren Ventilkörper 46 aufweist, an dem ein ringartiges Dichtelement 48 angeordnet ist. Der Ventilkörper 46 weist einen sich in axialer Richtung erstreckenden Führungszapfen 50 auf, der mit einem Führungsabschnitt 52 der Ablassöffnung 42 zusammenwirkt. Der Führungszapfen 50 kann dabei beispielsweise im Querschnitt kreuzrippenartig ausgebildet sein, so dass Ö1 entlang des Führungszapfens in die Ablassöffnung 42, beziehungsweise in einen Ablasskanal fließen kann.

Über ein erstes Federelement 54 wird der Ventilkörper 46 in seine Schließstellung beaufschlagt. Über ein zweites Federelement 56, das schwächer ausgebildet ist als das erste Federelement 54, wird der Ventilkörper 46 in Öffnungsstellung beaufschlagt. Zwischen dem Federelement 54 und dem Filterelement 20 ist ein Ausgleichskörper 58 vorgesehen, der am Ventilkörper 46 axial verlagerbar angeordnet ist. Der Ausgleichskörper dient dabei zum Ausgleich von axialen Toleranzen des Gehäuses und/oder des Filterelements.

Bei eingesetztem Filterelement wird der Ventilkörper 46 über den Ausgleichskörper 58 und das stärkere Federelement 54 in Schließrichtung beaufschlagt. Beim Herausnehmen des Filterelements 20 bewegt sich zunächst der Ausgleichskörper 58 nach axial oben, bis dieser auf einen Anschlag 60 am Ausgleichskörper 58 trifft. Aufgrund der Federkraft des Federelements 56 bewegt sich dann der Ventilkörper 46 nach axial oben, wodurch die Ablassöffnung 42 geöffnet wird und im Gehäuse 12 vorhandenes Öl über die Ablassöffnung 42 abfließen kann. Der Ausgleichskörper 58 ist dabei käfigartig ausgebildet, so dass er von Öl durchströmt werden kann.

Wie aus der Figur 4 deutlich wird, weist der Kragen 28 im Bereich des Ausgleichselements 58 eine Führung 62 in Form eines Durchbruchs auf. Die Führung 62 führt dabei den Ausgleichskörper 58 in axialer Richtung und verhindert ein Auslenken des Ausgleichskörpers in Querrichtung. Zudem dient die Führung 62 als Anschlag für am Ausgleichskörper 58 nach radial außen gerichtete Rückhalteabschnitte 64, deren radiales Außenmaß geringfügig größer ist als der Durchmesser der Führung 62. Dadurch wird der Ausgleichskörper 58 verliersicher im Gehäuse 12 angeordnet. Bei entnommenem Filterelement kann der Ausgleichskörper 58 folglich nicht in axialer Richtung nach oben entnommen werden.

Wie aus der Figur 1 deutlich wird, ist am freien, dem Boden 26 abgewandten Ende des Stützrohrs 22 ein Überdruck-Umgehungs-Ventil 66 angeordnet. Das Überdruck-Ventil 66 öffnet bei Überschreiten eines Grenzdrucks, so dass ungefiltertes Öl aus dem Aufnahmeraum 18 über das Staurohr 30 zum Ölablass 32 gelangen kann.

## Patentansprüche

1. Ölfilteranordnung (10) mit einem Gehäuse (12), das einen Aufnahmeraum (18) für ein in das Gehäuse (12) einsetzbares, radial mit Öl durchströmbare Filterelement (20) aufweist, und mit einem bei eingesetztem Filterelement (20) das Filterelement (20) tragenden Stützrohr (22), wobei am Boden (26) des Aufnahmeraums eine Ablassöffnung (42) und in der Ablassöffnung (42) ein Ablassventil (44) vorgesehen ist, das bei eingesetztem Filterelement (20) geschlossen ist, wobei das Ablassventil (44) einen Ausgleichskörper (58) zum Ausgleich von axialen Toleranzen des Gehäuses (12) und/oder des Filterelements ümfasst, **dadurch** qeke.mure:1.chnet, dass das vom Gehäuses (12) separat ausgebildete Stützrohr (22) eine als Durchbruch ausgebildete Führung (62) zur Führung des Ausgleichskörpers (58) außerhalb und oberhalb der Ablassöffnung (42) aufweist, wobei die Führung (62) an einem in nach radial außen gewandter Richtung abstehenden Fuß oder an einem in nach radial außen gewandter Richtung abstehenden Kragen (28) des Stützrohrs (22) angeordnet ist, wobei das Stützrohr (22) am Gehäuse (12) derart befestigt ist, dass der vom stützrohr (22) geführte Ausgleichskörper (58) gegen eine Auslenkung aufgrund von Querkräften geschützt ist.

2. Ölfilteranordnung (10) nach Anspruch 1, **dadurch gekennzeichnet, dass** die axiale Bewegbarkeit des Ausgleichskörpers (58) durch die Führung begrenzt wird.

3. Ölfilteranordnung (10) nach Anspruch 1 oder 2, **dadurch gekennzeichnet, dass** das Ablassventil (44) einen zwischen einer Schließstellung und einer Öffnungsstellung beweglich verlagerbaren Ventilkörper (46) umfasst, der bei eingesetztem Filterelement (20) von einem ersten Federelement (54) in die Schließstellung beaufschlagt wird und von einem zweiten, gegenüber dem ersten Federelement (54) schwächer ausgebildeten Federelement (56) in Öffnungsstellung beaufschlagt wird, wobei der Ausgleichskörper (58) am Ventilköper (46) axial verlagerbar angeordnet ist und bei eingesetztem Filterelement (20) vom ersten Federelement (54) gegen das Filterelement (20) beaufschlagt wird.

4. Ölfilteranordnung (10) nach einem der vorhergehenden Ansprüche, **dadurch gekennzeichnet, dass** das Stützrohr (22) in den Aufnahmeraum (18) eingesetzt und am Gehäuse (12) unlösbar und/oder verschraubt befestigt ist.

5. Ölfilteranordnung (10) nach Anspruch 3, **dadurch gekennzeichnet, dass** das Gehäuse (12) im Bereich des Bodens (26) des Aufnahmeraums Befestigungsabschnitte (36) aufweist und dass die dem Boden (26) des Aufnahmeraums (18) zugewandte Seite des Stützrohres (22) mit den Befestigungsabschnitten (36) korrespondierende Befestigungsbereiche (28) aufweist.

6. Ölfilteranordnung (10) nach Anspruch 4, **dadurch gekennzeichnet, dass** an den Befestigungsabschnitten (36) bzw. den Befestigungsbereichen (28) Verbindungszapfen (38) bzw. mit den Verbindungszapfen (38) korrespondierende Zapfenaussparungen (40) vorgesehen sind.

7. Ölfilteranordnung (10) nach Anspruch 5, **dadurch gekennzeichnet, dass** die Verbindungszapfen (38) als Nietzapfen, und insbesondere als Heißnietzapfen, ausgebildet sind.

8. Ölfilteranordnung (10) nach Anspruch 5 oder 6, **dadurch gekennzeichnet, dass** die Verbindungszapfen (38) als Rastzapfen ausgebildet sind.

9. Ölfilteranordnung (10) nach Anspruch 4, **dadurch gekennzeichnet, dass** die Befestigungsabschnitte Gewinde für eine Befestigungsbereiche durchgreifende Befestigungsschrauben aufweisen.

10. Ölfilteranordnung (10) nach einem der Ansprüche 5 bis 8, **dadurch gekennzeichnet, dass** die Verbindungszapfen ein Innen- oder Außengewinde für die Befestigungsschrauben aufweisen.

11. Ölfilteranordnung (10) nach einem der Ansprüche 5 bis 9, **dadurch gekennzeichnet, dass** die Befestigungsabschnitte (36) des Gehäuses als in axialer und/oder radialer Richtung verlaufende Stege ausgebildet sind, an deren dem Filterelement zugewandten Oberseiten jeweils wenigstens ein Verbindungszapfen (38) angeordnet ist.

12. Ölfilteranordnung (10) nach einem der Ansprüche 4 bis 10, **dadurch gekennzeichnet, dass** die Befestigungsbereiche (28) des Stützrohrs (22) als in nach radial außen gewandter Richtung abstehende Füße oder als in nach radial außen gewandter Richtung abstehender und wenigstens abschnittsweise umlaufender Kragen (28) ausgebildet sind.

13. Ölfilteranordnung (10) nach einem der vorhergehenden Ansprüche, **dadurch gekennzeichnet, dass** das Stützrohr (22) im Bereich des Bodens (26) des Aufnahmeraums (18) ein in radialer Richtung geschlossenes, zum Stützrohr (22) radial beabstandetes Staurohr (38) umgibt.

14. Ölfilteranordnung (10) nach einem der vorhergehenden Ansprüche, **dadurch gekennzeichnet, dass** an der dem Boden (26) des Aufnahmeraums (18) abgewandten freien Seite des Stützrohrs (22) ein Überdruck-Umgehungs-Ventil (66) angeordnet ist.

## Claims

1. An oil filter assembly (10), having a housing (12) which has a reception chamber (18) for a filter element (20) which can be inserted into the housing (12) and through which oil can radially flow, and with a support pipe (22) which, with the filter element (20) inserted, supports the filter element (20), wherein a drain opening (42) is provided at the bottom (26) of the reception chamber, and a drain valve (44) is provided in the drain opening (42), which is closed when the filter element (20) has been inserted, wherein the drain valve (44) includes a compensating body (58) for compensating axial tolerances of the housing (12) and/or the filter element, **characterized in that** the support pipe (22), which is embodied separately of the housing (12), has a guidance arrangement (62), embodied as a hole, for guiding the compensating body (58) outside of and above the outlet opening (42), and the guidance arrangement (62) is arranged on a foot, which extends facing in a radially outward direction, or on a collar (28) of the support pipe (22), which extends facing in a radially outward direction, wherein the support pipe (22) is fastened on the housing (12) in such a way that the compensating body (58), which is guided by the support pipe (22) is protected against being deflected by transverse forces.

2. The oil filter assembly (10) in accordance with claim 1, **characterized in that** the axial mobility of the compensating body (58) is limited by the guidance device.

3. The oil filter assembly (10) in accordance with claim 1 or 2, **characterized in that** drain valve (44) has a valve body (46), which can be movably displaced between a closing position and an opening position and which, with the filter element (20) inserted, is acted upon by a first spring element (54) in the direction of the closing position, and is acted upon by a second spring element (56), which is designed to be weaker in comparison with the first spring element (54), in the direction of the opening position, wherein the compensating body (58) is arranged on the valve body (46) so that it can be axially displaced and, with the filter element (20) inserted, is urged against the filter element (20) by the first spring element (54).

4. The oil filter assembly (10) in accordance with one of the preceding claims, **characterized in that** the support pipe (22) is inserted into the reception chamber (18) and is fastened on the housing (12) in a fixed manner and/or is screwed to it.

5. The oil filter assembly (10) in accordance with claim 3, **characterized in that** the housing (12) has fastening sections (36) in the area of the bottom (26) of the reception chamber, and that the side of the support pipe (22) facing the bottom (26) of the reception chamber (18) has fastening areas (28) which correspond to the fastening sections (36).

6. The oil filter assembly (10) in accordance with claim 4, **characterized in that** connecting pins (38), or respectively pin receptacles (40) corresponding to the connecting pins (38), are provided on the fastening sections (36), or respectively the fastening areas (28).

7. The oil filter assembly (10) in accordance with claim 5, **characterized in that** the connecting pins (38) are embodied as rivet pins, and in particular as hot rivet pins.

8. The oil filter assembly (10) in accordance with claim 5 or 6, **characterized in that** the connecting pins (38) are embodied as snap-in pins.

9. The oil filter assembly (10) in accordance with claim 4, **characterized in that** the fastening sections have screw threads for a fastening screw extending through the fastening areas.

10. The oil filter assembly (10) in accordance with one of claims 5 to 8, **characterized in that** the connecting pins have interior or exterior screw threads for the fastening screws.

11. The oil filter assembly (10) in accordance with one of claims 5 to 9, **characterized in that** the fastening sections (36) are embodied as strips extending in the axial and/or radial direction, on whose tops which face the filter element at least one connecting pin (38) is respectively arranged.

12. The oil filter assembly (10) in accordance with one of claims 4 to 10, **characterized in that** the fastening areas (28) of the support pipe (22) are embodied as feet, which extend facing in a radially outward direction, or as a collar (28), which extends facing in a radially outward direction and at least sections of which extend around the pipe.

13. The oil filter assembly (10) in accordance with one of the preceding claims, **characterized in that** in the area of the bottom (26) of the reception chamber (18) the support pipe (22) surrounds a pressure tube (38), which is closed in the radial direction and is radially spaced apart from the support pipe (22).

14. The oil filter assembly (10) in accordance with one of the preceding claims, **characterized in that** an overpressure bypass valve (66) is arranged on the free side of the support pipe (22) which faces away from the bottom (26) of the reception chamber (18).

## Revendications

1. Ensemble de filtre à huile (10), comportant un boîtier (12), qui comporte un logement (18) pour un élément filtrant (20), qui est destiné à être mis en place dans le boîtier (12) et qui est traversé dans le sens radial par l'huile, et comportant un tube support (22) supportant l'élément filtrant (20) lorsque celui-ci est mis en place, un orifice d'évacuation (42) étant prévu dans le fond (26) du logement et une soupape d'évacuation (44) étant prévue dans l'orifice d'évacuation (42) et étant fermée lorsque l'élément filtrant (20) est mis en place, la soupape d'évacuation (44) comportant un corps de compensation (58) pour compenser les tolérances axiales du boîtier (12) et/ou de l'élément filtrant, **caractérisé en ce que** le tube support (22), réalisé séparément du boîtier (12), comporte un guidage (62), réalisé sous la forme d'un passage, en vue de guider le corps de compensation (58) en dehors et au-dessus de l'orifice d'évacuation (42), ledit guidage (62) étant disposé sur un pied en saillie dans la direction radiale vers l'extérieur ou sur un collet (28) en saillie dans la direction radiale vers l'extérieur, ledit tube support (22) étant fixé contre le boîtier (12) de telle sorte que le corps de compensation (58) guidé par le tube support (22) est protégé contre toute déviation sous l'effet des forces transversales.

2. Ensemble de filtre à huile (10) selon la revendication 1, **caractérisé en ce que** la mobilité axiale du corps de compensation (58) est limitée par le guidage.

3. Ensemble de filtre à huile (10) selon la revendication 1 ou 2, **caractérisé en ce que** la soupape d'évacuation (44) comporte un corps de soupape (46), qui est mobile en translation entre une position de fermeture et une position d'ouverture et qui, lorsque l'élément filtrant (20) est mis en place, est sollicité dans la position de fermeture par un premier élément de ressort (54) et est sollicité dans la position d'ouverture par un deuxième élément de ressort (56), plus faible que le premier élément de ressort (54), le corps de compensation (58) étant disposé de manière mobile dans le sens axial et, lorsque l'élément filtrant (20) est mis en place, étant sollicité par le premier élément de ressort (54) contre l'élément filtrant (20).

4. Ensemble de filtre à huile (10) selon l'une quelconque des revendications précédentes, **caractérisé en ce que** le tube support (22) est inséré dans le logement (18) et est fixé contre le boîtier (12) de manière inamovible et/ou par vissage.

5. Ensemble de filtre à huile (10) selon la revendication 3, **caractérisé en ce que** le boîtier (12), dans la zone du fond (26) du logement, comporte des parties de fixation (36), et **en ce que** le côté du tube support (22), orienté vers le fond (26) du logement (18), comporte des zones de fixation (28) complémentaires des parties de fixation (36).

6. Ensemble de filtre à huile (10) selon la revendication 4, **caractérisé en ce que** sur les parties de fixation (36) et, respectivement, sur les zones de fixation (28) sont prévus des tenons d'assemblage (38) et, respectivement, des évidements (40) complémentaires des tenons d'assemblage (38).

7. Ensemble de filtre à huile (10) selon la revendication 5, **caractérisé en ce que** les tenons d'assemblage (38) sont réalisés sous la forme de tenons à riveter, et en particulier sous la forme de tenons à riveter à chaud.

8. Ensemble de filtre à huile (10) selon la revendication 5 ou 6, **caractérisé en ce que** les tenons d'assemblage (38) sont réalisés sous la forme de tenons à encliqueter.

9. Ensemble de filtre à huile (10) selon la revendication 4, **caractérisé en ce que** les parties de fixation comportent des filetages pour des vis de fixation passant à travers les zones de fixation.

10. Ensemble de filtre à huile (10) selon l'une quelconque des revendications 5 à 8, **caractérisé en ce que** les tenons d'assemblage comportent un filetage intérieur ou un filetage extérieur pour les vis de fixation.

11. Ensemble de filtre à huile (10) selon l'une quelconque des revendications 5 à 9, **caractérisé en ce que** les parties de fixation (36) du boîtier sont réalisées sous la forme de nervures, qui sont orientées dans la direction axiale et/ou la direction radiale et sur les faces supérieures desquelles, orientées vers l'élément filtrant, est disposé respectivement au moins un tenon d'assemblage (38).

12. Ensemble de filtre à huile (10) selon l'une quelconque des revendications 4 à 10, **caractérisé en ce que** les zones de fixation (28) du tube support (22) sont réalisées sous la forme de pieds s'avançant en saillie dans la direction radiale vers l'extérieur ou sous la forme d'un collet (28) s'avançant en saillie dans la direction radiale vers l'extérieur et périphérique au moins par zones.

13. Ensemble de filtre à huile (10) selon l'une quelconque des revendications précédentes, **caractérisé en ce que** le tube support (22), dans la zone du fond (26) du logement (18), entoure un tube de retenue (38) fermé dans la direction radiale et situé à distance radiale du tube support (22).

14. Ensemble de filtre à huile (10) selon l'une quelconque des revendications précédentes, **caractérisé en ce que** sur le côté libre du tube support (22), détourné du fond (26) du logement (18), est disposée une soupape de by-pass de surpression (66).
